# FASCICULE DE BREVET EUROPEEN

(11) **EP 3 350 239 B1**
(45) Date de publication et mention de la délivrance du brevet: **06.11.2019**
(21) Numéro de dépôt: 16777727.5
(22) Date de dépôt: 15.09.2016
(51) Int. Cl.: C08F 297/04, C08L 33/06, C08L 53/02, C08L 95/00

(54) **COMPOSITION BITUME / POLYMERE PRESENTANT DES PROPRIETES MECANIQUES AMELIOREES**
BITUMEN-/POLYMERZUSAMMENSETZUNG MIT VERBESSERTEN MECHANISCHEN EIGENSCHAFTEN
BITUMEN/POLYMER COMPOSITION HAVING IMPROVED MECHANICAL PROPERTIES

(30) Priorité: 18.09.2015 FR 1558800
(43) Date de publication de la demande: 25.07.2018
(73) Titulaire: Total Marketing Services, 92800 Puteaux (FR)
(72) Inventeur: RUOT, Carole, 69540 Irigny (FR); BOTEL, Romuald, 38121 Chonas L'Amballan (FR)
(74) Mandataire: Corizzi, Valérie
(86) Numéro de dépôt international: PCT/FR2016/052323
(87) Numéro de publication internationale: WO 2017/046523

(56) Documents cités:
- WO-A1-2008/137394
- US-A- 6 011 094

## Description

### Domaine technique

La présente invention concerne le domaine des bitumes. Plus spécifiquement, elle concerne des compositions bitume/polymère thermoréticulables comprenant un adjuvant de type polymère oléfinique, ces compositions ayant des propriétés mécaniques améliorées.

L'invention concerne également l'utilisation de ces compositions dans les domaines des applications routières telles que les enrobés à chaud ; les enrobés tièdes ; les enrobés à froid, par exemple les enrobés coulés à froid ou les graves émulsions ; ou les enduits superficiels, par exemple les émulsions ou les bitumes fluxés ; et dans les domaines des applications industrielles, par exemple dans la fabrication de revêtements intérieurs et extérieurs.

### Etat de la technique antérieure

De nombreux travaux ont porté sur l'amélioration des propriétés mécaniques, élastiques et/ou rhéologiques de compositions bitumineuses. Des compositions bitume/polymère présentant des propriétés améliorées ainsi que leur procédé de préparation ont été largement décrites dans la littérature.

Parmi les polymères ajoutés aux bitumes, les copolymères statistiques ou séquencés de styrène et d'un diène conjugué et, notamment, de styrène et de butadiène ou de styrène et d'isoprène sont connus pour être particulièrement efficaces car ils se mélangent très facilement dans les bitumes et leur confèrent d'excellentes propriétés mécaniques et notamment de très bonnes propriétés élastiques.

Ces compositions bitume/polymère sont utilisées pour la préparation de liants pour des revêtements de surfaces diverses et, en particulier, comme revêtements superficiels routiers, à condition que ces compositions présentent en combinaison un certain nombre de caractéristiques mécaniques. Des caractéristiques mécaniques optimisées telles que les propriétés élastiques sont notamment cruciales pour les applications dans les revêtements routiers.

La demande WO97/43341 décrit des compositions bitume/polymère contenant un bitume ou un mélange de bitumes et 0,3% à 20%, en poids par rapport au poids de bitume, d'au moins un polymère primaire choisi parmi certains élastomères et plastomères et 0,01% à 12% en poids d'au moins un adjuvant de type polymère oléfinique portant des groupements époxy ou COOH. Les polymères mis en œuvre dans ce document sont différents de ceux de l'invention. Le rôle de l'adjuvant est d'éviter la démixtion entre la phase bitumineuse et la phase polymère, ce qui améliore la stabilité au stockage de la composition.

La demande WO2015/071370 décrit des compositions bitume/polymère présentant des propriétés mécaniques à froid améliorées et comprenant :
- une première base bitume ayant une stabilité intrinsèque S supérieure à 2,5 et/ou un taux de peptisation Sa supérieur à 0,60
- une deuxième base bitume ayant une stabilité intrinsèque S inférieure ou égale à 2,50 et/ou un taux de peptisation Sa inférieur ou égal à 0,60,
- un élastomère et,
- un adjuvant polymère oléfinique fonctionnalisé par au moins des groupements fonctionnels glycidyle.

Les compositions illustrées sont réticulées au soufre et mettent en œuvre un terpolymère séquencé SBS.

La demande WO2008/137394 décrit un procédé pour préparer une composition de liant bitumineux modifié par un polymère en l'absence d'agents de réticulation par chauffage d'un bitume à une température de 160°C à 221°C, ajout d'une composition de copolymère bloc et agitation pour former un mélange homogène. Les compositions de copolymère bloc mises en œuvre comprennent un ou plusieurs copolymères à blocs ayant au moins un bloc monovinylaromatique, au moins une séquence polybutadiène ayant une teneur en vinyle inférieure à 15 pourcent mol et au moins une séquence polybutadiène ayant une teneur en vinyle de plus de 25 pour cent en moles. Il est enseigné que les compositions bitume/polymère ainsi formulées ont des propriétés mécaniques améliorées, telles que la ductilité, et une bonne stabilité au stockage.

Toutefois, on a constaté que les propriétés mécaniques de certaines de ces compositions n'étaient pas entièrement satisfaisantes, notamment on a constaté que la résistance à la traction de ces compositions était généralement insuffisante.

On a également constaté que la stabilité au stockage de certaines de ces compositions n'était pas entièrement satisfaisante.

L'invention a visé à mettre au point une composition de bitume additivée qui soit thermoréticulable et qui présente des propriétés élastiques et une stabilité au stockage améliorées. On a cherché un système qui soit efficace dans toutes sortes de bitumes et qui ne soit pas limité à une application à des bitumes très spécifiques. On a cherché à mettre au point des compositions présentant une résistance à la traction améliorée et une stabilité au stockage satisfaisante.

### Résumé de l'invention

L'invention concerne une composition bitume/polymère comprenant :
- du bitume,
- au moins un élastomère, et
- au moins un adjuvant polymère oléfinique fonctionnalisé par au moins des groupements fonctionnels glycidyle,
caractérisée en ce que :
- l'élastomère est choisi parmi les copolymères bloc thermoréticulables de formule S-B1-B2, dans laquelle S représente un bloc hydrocarboné monovinyl aromatique ayant un poids moléculaire de pic de 10 000 à 25 000, B1 est un bloc polybutadiène ayant une teneur en vinyle inférieure ou égale à 15 pour cent en mole, B2 est un bloc polybutadiène ayant une teneur en vinyle supérieure ou égale à 25 pour cent en moles, le rapport en masse B1/B2 est supérieur ou égal à 1: 1, et dans lequel le copolymère à blocs S-B1-B2 a un poids moléculaire de pic de 40 000 à 200 000 ;
- l'élastomère peut comprendre en outre au moins un copolymère bloc thermoréticulable répondant à la formule (S-Bl-B2)nX dans laquelle chaque S représente un bloc hydrocarboné monovinyl aromatique ayant un poids moléculaire de pic de 10 000 à 25 000, chaque B1 représente un bloc polybutadiène ayant une teneur en vinyle inférieure ou égale à 15 pour cent en moles, chaque B2 représente un bloc polybutadiène ayant une teneur en vinyle supérieure ou égale à 25 pour cent en mole, n est un nombre entier allant de 2 à 6, et X est le résidu d'un agent de couplage, dans laquelle le rapport en masse B1/B2 est supérieur ou égal à 1: 1, et le copolymère bloc (S-Bl-B2)nX a un poids moléculaire de pic qui est de 1,5 à 6,0 fois le poids moléculaire de pic du copolymère bloc S-B1-B2 ;
et le ratio massique élastomère/adjuvant dans la composition va de 15/1 à 2/1.

L'invention a encore pour objet un procédé de préparation d'une composition bitume/polymère telle que définie ci-dessus, et ci-dessous pour les modes de réalisation préférés, caractérisé en ce qu'on met en contact, en opérant à des températures comprises entre 100°C et 200°C et sous agitation pendant une durée d'au moins 10 minutes :
- du bitume,
- de 0,5% à 20% en masse d'au moins un élastomère,
- de 0,05% à 2,5% en masse d'au moins un adjuvant polymère oléfinique,
- éventuellement des additifs.

Selon un mode de réalisation préféré, le rapport en masse :

S-B1-B2/(S-B1-B2)nX

est supérieur ou égal à 1: 1, de préférence de 1: 1 à 10: 1, et encore mieux de 1: 1 à 4: 1.

Selon un mode de réalisation préféré, S représente le styrène.

Selon un mode de réalisation préféré, la composition comprend de 0,5% à 20% en masse d'élastomère par rapport à la masse totale de la composition, de préférence de 0,5 à 15%.

Selon un mode de réalisation préféré, la composition comprend de 0,05% à 2,5% en masse d'adjuvant polymère oléfinique par rapport à la masse totale de la composition, de préférence de 0,15 à 2%.

Selon un mode de réalisation préféré, l'adjuvant polymère oléfinique est choisi dans le groupe consistant en :
(a) les copolymères, statistiques ou séquencés, d'éthylène et d'un monomère choisi parmi l'acrylate de glycidyle et le méthacrylate de glycidyle, comprenant de 50% à 99,7% en masse d'éthylène;
(b) les terpolymères, statistiques ou séquencés, d'éthylène, d'un monomère A choisi parmi l'acétate de vinyle et les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène ; et
(c) les copolymères résultant du greffage d'un monomère B choisi parmi l'acrylate de glycidyle et le méthacrylate de glycidyle, sur un substrat consistant en un polymère choisi parmi les polyéthylènes, les polypropylènes, les copolymères statistiques ou séquencés d'éthylène et d'acétate de vinyle et les copolymère statistiques ou séquencés d'éthylène et d'acrylate ou méthacrylate d'alkyle en C₁ à C₆, comprenant de 40% à 99,7% en masse d'éthylène, lesdits copolymères greffés comprenant de 0,5% à 15% en masse de motifs greffés issus du monomère B,
(d) les mélanges d'au moins deux composés (a), (b) et (c).

Selon un mode de réalisation avantageux, l'adjuvant polymère oléfinique est choisi parmi les terpolymères statistiques ou séquencés d'éthylène, d'un monomère A choisi parmi l'acétate de vinyle et les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène.

Selon un mode de réalisation encore plus avantageux, l'adjuvant polymère oléfinique est choisi parmi les terpolymères statistiques d'éthylène, d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène.

L'invention concerne encore un asphalte caractérisé en ce qu'il comprend au moins une composition bitume/polymère telle que définie ci-dessus, et des charges minérales et/ou synthétiques.

L'invention concerne encore un asphalte caractérisé en ce qu'il consiste essentiellement en au moins une composition bitume/polymère telle que définie ci-dessus, et des charges minérales et/ou synthétiques.

L'invention concerne encore un enrobé bitumineux caractérisé en ce qu'il comprend au moins une composition bitume/polymère telle que définie ci-dessus, des granulats, et éventuellement des charges minérales et/ou synthétiques.

L'invention concerne encore un enrobé bitumineux caractérisé en ce qu'il consiste essentiellement en au moins une composition bitume/polymère telle que définie ci-dessus, des granulats, et éventuellement des charges minérales et/ou synthétiques.

L'invention concerne encore l'utilisation d'au moins une composition bitume/polymère telle que définie ci-dessus pour préparer un enduit superficiel, un enrobé à chaud, un enrobé tiède, un enrobé à froid, un enrobé coulé à froid, une grave émulsion, ledit liant étant associé à des granulats et/ou des fraisats de recyclage.

L'invention concerne encore l'utilisation d'au moins une composition bitume/polymère telle que définie ci-dessus, pour préparer un revêtement d'étanchéité, une membrane ou une couche d'imprégnation.

Les compositions de l'invention présentent de nombreux avantages : elles présentent des propriétés élastiques améliorées, en particulier une résistance à la traction améliorée, notamment une traction à 5°C mesurée suivant la norme EN 13587 supérieure ou égale à 500%. Elles présentent également une stabilité satisfaisante au stockage à chaud, en particulier une stabilité au stockage à 180°C supérieure ou égale à 3 jours, notamment une stabilité au stockage à 180°C caractérisée par une variation de pénétrabilité à 25°C mesurée selon la norme EN 1426 inférieure ou égale à 5 1/10 mm et/ou une variation de température Bille et Anneau mesurée selon la norme 1427 inférieure ou égale à 5°C. L'association d'élastomère et d'adjuvant polymère oléfinique mise au point permet d'améliorer les propriétés mécaniques, notamment les propriétés élastiques, et la stabilité au stockage d'une large gamme de compositions de bitumes.

### Description détaillée

La demanderesse a découvert que l'utilisation d'un élastomère spécifique en association avec un adjuvant polymère particulier pour la préparation des compositions bitume/polymère permet d'améliorer de façon surprenante les propriétés mécaniques, notamment les propriétés élastiques, en particulier de résistance à la traction, et la stabilité au stockage de cette composition bitume/polymère. En effet, la demanderesse a mis en évidence un effet synergique particulier induit par l'utilisation conjointe d'un élastomère particulier et d'un adjuvant polymère spécifique. Cette observation n'est pas limitée à une classe de bitumes particuliers.

En outre la composition bitume/polymère de l'invention présente l'avantage d'être économique par rapport à une composition bitume/polymère à base des mêmes polymères bloc S-B1-B2 et sans adjuvant. En effet, l'ajout de l'adjuvant, en faible quantité, permet de réduire significativement la quantité de polymère séquencé mis en œuvre, à propriétés mécaniques équivalentes, voire supérieures et permet d'obtenir une stabilité au stockage très satisfaisante.

Dans la présente invention, l'expression « composition bitume/polymère » et « liant bitume/polymère » représentent un même type de composition et sont employées indifféremment.

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.

### Les bitumes :

L'invention concerne les bitumes. Ceux-ci peuvent être formés par une ou plusieurs bases bitume.

Par « bitume », on entend toutes compositions bitumineuses constituées d'une ou de plusieurs bases bitumes et comprenant éventuellement un ou plusieurs additifs chimiques, lesdites compositions étant destinées à une application routière ou une application industrielle.

Parmi les bases bitumes utilisables selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Les bases bitumes selon l'invention sont avantageusement choisies parmi les bases bitumes provenant du raffinage du pétrole brut. Les bases bitumes peuvent être choisies parmi les bases bitumes ou mélanges de bases bitumes provenant du raffinage du pétrole brut, en particulier des bases bitumes contenant des asphaltènes ou des brais. Les bases bitumes peuvent être obtenues par des procédés conventionnels de fabrication des bases bitumes en raffinerie, en particulier par distillation directe et/ou distillation sous vide du pétrole. Ces bases bitumes peuvent être éventuellement viscoréduites et/ou désasphaltées et/ou rectifiées à l'air. Il est courant de procéder à la distillation sous vide des résidus atmosphériques provenant de la distillation atmosphérique de pétrole brut. Ce procédé de fabrication correspond, par conséquent, à la succession d'une distillation atmosphérique et d'une distillation sous vide, la charge alimentant la distillation sous vide correspondant aux résidus atmosphériques. Ces résidus sous vide issus de la tour de distillation sous vide peuvent être également utilisés comme bitumes. Il est également courant d'injecter de l'air dans une charge composée habituellement de distillats et de produits lourds provenant de la distillation sous vide de résidus atmosphériques provenant de la distillation du pétrole. Ce procédé permet d'obtenir une base soufflée, ou semi-soufflée ou oxydée ou rectifiée à l'air ou rectifiée partiellement à l'air.

Les différentes bases bitumes obtenues par les procédés de raffinage peuvent être combinées entre elles pour obtenir le meilleur compromis technique. La base bitume peut aussi être une base bitume de recyclage. Les bases bitumes peuvent être des bases bitumes de grade dur ou de grade mou.

Selon l'invention, pour les procédés conventionnels de fabrication des bases bitumes, on opère à des températures de fabrication comprises entre 100°C et 200°C, de préférence entre 140°C et 200°C, et sous agitation pendant une durée d'au moins 10 minutes, de préférence comprise entre 30 minutes et 10 heures, plus préférentiellement entre 1 heure et 6 heures. On entend par température de fabrication, la température de chauffage de la ou des bases bitumes avant mélange ainsi que la température de mélange. La température et la durée du chauffage varient selon la quantité de bitume utilisée et sont définies par la norme NF EN 12594.

Selon l'invention, les bitumes soufflés peuvent être fabriqués dans une unité de soufflage, en faisant passer un flux d'air et/ou d'oxygène à travers une base bitumineuse de départ. Cette opération peut être menée en présence d'un catalyseur d'oxydation, par exemple de l'acide phosphorique. Généralement, le soufflage est réalisé à des températures élevées, de l'ordre de 200 à 300°C, pendant des durées relativement longues typiquement comprises entre 30 minutes et 2 heures, en continu ou par lots. La durée et la température de soufflage sont ajustées en fonction des propriétés visées pour le bitume soufflé et en fonction de la qualité du bitume de départ.

Le bitume peut aussi être un bitume de recyclage.

Les bitumes peuvent être des bitumes de grade dur ou de grade mou. Les bitumes utilisables selon l'invention ont une pénétrabilité, mesurée à 25°C selon la norme EN 1426, de 5 à 330 1/10 mm, de préférence entre 10 à 220 1/10 mm, plus préférentiellement de 10 à 120 1/10 mm.

De manière bien connue, la mesure dite de « pénétrabilité à l'aiguille » est réalisée au moyen d'un test normalisé NF EN 1426 à 25°C (P₂₅). Cette caractéristique de pénétrabilité est exprimée en dixièmes de millimètre (dmm ou 1/10 mm). La pénétrabilité à l'aiguille, mesurée à 25°C, selon le test normalisé NF EN 1426, représente la mesure de la pénétration dans un échantillon de bitume, au bout d'un temps de 5 secondes, d'une aiguille dont le poids avec son support est de 100 g. La norme NF EN 1426 remplace la norme homologuée NF T 66-004 de décembre 1986 avec effet au 20 décembre 1999 (décision du Directeur Général d'AFNOR en date du 20 novembre 1999).

### L'adjuvant polymère oléfinique

L'adjuvant polymère oléfinique est choisi, de préférence, dans le groupe consistant en (a) les copolymères éthylène/(méth)acrylate de glycidyle ; (b) les terpolymères éthylène/monomère A/monomère B et (c) les copolymères résultant du greffage d'un monomère B sur un substrat polymère, (d) les mélanges de ces copolymères.
(a) Les copolymères éthylène/(méth)acrylate de glycidyle sont, avantageusement, choisis parmi les copolymères statistiques ou séquencés, de préférence statistiques, d'éthylène et d'un monomère choisi parmi l'acrylate de glycidyle et le méthacrylate de glycidyle, comprenant de 50% à 99,7% en masse, de préférence de 60% à 95% en masse, plus préférentiellement 60% à 90% en masse d'éthylène.
(b) Les terpolymères sont, avantageusement, choisis parmi les terpolymères statistiques ou séquencés, de préférence statistiques, d'éthylène, d'un monomère A et d'un monomère B.

Le monomère A est choisi parmi l'acétate de vinyle et les acrylates ou méthacrylates d'alkyle en C₁ à C₆.

Le monomère B est choisi parmi l'acrylate de glycidyle et le méthacrylate de glycidyle.

Les terpolymères éthylène/monomère A/monomère B comprennent de 0,5% à 40% en masse, de préférence de 5 à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène ;
(c) les copolymères résultent du greffage d'un monomère B choisi parmi l'acrylate de glycidyle et le méthacrylate de glycidyle, sur un substrat polymère. Le substrat polymère consiste en un polymère choisi parmi les polyéthylènes, notamment les polyéthylènes basse densité, les polypropylènes, les copolymères statistiques ou séquencés, de préférence statistiques, d'éthylène et d'acétate de vinyle et les copolymère statistiques ou séquencés, de préférence statistiques, d'éthylène et d'acrylate ou méthacrylate d'alkyle en C₁ à C₆, comprenant de 40% à 99,7% en masse, de préférence de 50% à 99% en masse d'éthylène. Lesdits copolymères greffés comprennent de 0,5% à 15% en masse, de préférence de 2,5% à 15% en masse de motifs greffés issus du monomère B.
(d) L'adjuvant polymère oléfinique peut consister en un mélange de deux ou plus de copolymères choisis dans les catégories (a), (b) et (c).

L'adjuvant polymère oléfinique est, de préférence, choisi parmi les terpolymères (b) éthylène/monomère A/monomère B décrit ci-dessus et parmi les mélanges (d) les comprenant.

L'adjuvant polymère oléfinique est, avantageusement, choisi parmi les terpolymères (b) éthylène/monomère A/monomère B décrit ci-dessus et parmi les mélanges (d) dans lesquels les terpolymères (b) représentent au moins 50% en masse par rapport à la masse totale du mélange, préférentiellement au moins 75% en masse, encore mieux au moins 90% en masse.

Avantageusement, l'adjuvant polymère oléfinique est choisi parmi les terpolymères statistiques d'éthylène, d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse, de préférence de 5 à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

### L'élastomère :

L'élastomère est un copolymère tri-séquencé ou un mélange de copolymères tri-séquencés.

Il est choisi parmi les copolymères bloc thermoréticulables de formule S-B1-B2, dans laquelle S représente un bloc hydrocarboné monovinyl aromatique ayant un poids moléculaire de pic de 10000 à 25000, B1 est un bloc polybutadiène ayant une teneur en vinyle inférieure ou égale à 15 pour cent en mole, B2 est un bloc polybutadiène ayant une teneur en vinyle supérieure ou égale à 25 pour cent en moles, et le rapport en masse B1/B2 est supérieur ou égal à 1: 1, et dans lequel le terpolymère à blocs S-B1-B2 a un poids moléculaire de pic d'environ 40 000 à environ 200 000.

L'élastomère peut comprendre en outre au moins un copolymère bloc thermoréticulable répondant à la formule (S-B1-B2)nX dans laquelle chaque S représente un bloc hydrocarboné monovinyl aromatique ayant un poids moléculaire de pic de 10 000 à 25 000, chaque B1 représente un bloc polybutadiène ayant une teneur en vinyle inférieure ou égale à 15 pour cent en moles, chaque B2 représente un bloc polybutadiène ayant une teneur en vinyle supérieure ou égale à 25 pour cent en moles, n est un nombre entier allant de 2 à 6, et X est le résidu d'un agent de couplage, le rapport en masse B1/B2 est supérieur ou égal à 1: 1, et le copolymère bloc (S-B1-B2)nX a un poids moléculaire de pic qui est de 1,5 à 6,0 fois le poids moléculaire de pic du copolymère bloc S-B1-B2.

Les groupements hydrocarbonés monovinylaromatiques désignés S peuvent être tout composé hydrocarboné monovinylaromatique connu pour une utilisation dans la préparation de copolymères à blocs tels que : le styrène, l'o-méthylstyrène, le p-méthylstyrène, le p-tert-butylstyrène, le 2,4-diméthylstyrène, l'alpha-méthylstyrène, le vinylnaphtalène, le vinyltoluène et le vinylxylène ou leurs mélanges. Le composé hydrocarboné monovinyl aromatique préféré selon la présente invention est le styrène, qui est utilisé en tant que monomère sensiblement pur ou en tant que composant majoritaire dans des mélanges avec des proportions mineures d'un autre monomère vinyle aromatique de structure apparentée, tels que l'o- méthylstyrène, le p-méthylstyrène, le p-tert-butylstyrène, le 2,4- diméthylstyrène, l'alpha méthylstyrène, le vinylnaphtalène, le vinyltoluène et le vinylxylène, à savoir, dans des proportions d'au plus 10% en poids. L'utilisation de styrène sensiblement pur est particulièrement préférée dans la présente invention.

Les blocs de polybutadiène B1, B2 entrant dans la composition des copolymères blocs mentionnés ci-dessus sont à base de monomère butadiène pratiquement pur ou comprenant des proportions mineures, jusqu'à 10% en poids, de diènes conjugués structurellement apparentés. De préférence, le polybutadiène est purement constitué à partir de monomère butadiène.

En ce qui concerne les copolymères séquencés de la présente invention, le terme "poids moléculaire" se réfère au poids moléculaire véritable en g / mole du copolymère bloc. Les poids moléculaires mentionnés dans la description et les revendications peuvent être mesurés par chromatographie de perméation sur gel (CPG) en utilisant des étalons de polystyrène, par exemple comme enseigné selon la norme ASTM 3536. La CPG est un procédé bien connu dans lequel les polymères sont séparés selon leur masse moléculaire, la plus grande molécule étant éluée en premier. Le chromatographe est étalonné en utilisant des étalons de polystyrène de masses moléculaires variées disponibles dans le commerce. La masse moléculaire des polymères mesurée par CPG est une masse moléculaire en équivalents de styrène. La masse moléculaire équivalente en styrène peut être convertie en masse moléculaire vraie lorsque la teneur en styrène du polymère et la teneur en vinyle des blocs de diène sont connus. Le détecteur utilisé est de préférence une combinaison de rayons ultraviolets et d'un détecteur d'indice de réfraction. Les masses moléculaires sont mesurées au sommet du pic de CPG, converties en masses moléculaires vraies, et sont couramment appelées « masses moléculaires de pic ».

La masse moléculaire de pic de chaque bloc hydrocarboné monovinyl aromatique, notamment de polystyrène, est d'environ 10 000 à environ 25 000, de préférence d'environ 12 000 à environ 20 000. Selon une variante préférée, la masse moléculaire de pic des blocs styréniques va de environ 14 000 à environ 18 000.

Chaque copolymère séquencé de formule S-B1-B2 utilisé dans la présente invention présente une masse moléculaire de pic d'environ 40 000 à environ 200 000, de préférence d'environ 65 000 à environ 160 000, de préférence encore d'environ 75 000 à environ 150 000, et encore plus préférablement d'environ 75 000 à 130 000.

La masse moléculaire de pic des copolymères à blocs de formule (S-B1-B2)nX dépend de la masse moléculaire de pic du copolymère séquencé de formule S-B1-B2 utilisé. Plus spécifiquement, la masse moléculaire de pic des copolymères (S-B1-B2)nX est d'environ 1,5 à environ 6,0 fois la masse moléculaire de pic du copolymère séquencé S-B1-B2. De préférence, la masse moléculaire de pic des copolymères blocs (S-B1-B2)nX est d'environ 1,8 à environ 5,0 fois la masse moléculaire de pic du copolymère séquencé S-B1-B2.

La masse moléculaire combinée des deux blocs de butadiène (B1 et B2) est d'environ 25 000 à environ 190 000. Les deux blocs de butadiène (B1 et B2) sont présents en un rapport pondéral B1/B2 supérieur ou égal à 1: 1. En d'autres termes, B1 est présent en une quantité (% en poids) supérieure ou égale à 50% du total du segment B1-B2 et B2 est présent en une quantité (% en poids) inférieure ou égale à 50% du total du segment B1-B2.

Lorsque le 1, 3-butadiène est polymérisé par l'intermédiaire d'un mécanisme de 1, 2-addition, le résultat est un groupe vinyle pendant par rapport au squelette du polymère. Comme indiqué plus haut, le polybutadiène est présent en des blocs ou des segments qui contiennent différentes teneurs en vinyle. Cette teneur en vinyle permet de caractériser le polymère.

En ce qui concerne le bloc polybutadiène B1, il est préférable qu'il y ait au maximum environ 15 pour cent en moles de vinyle dans le bloc B1. Préférentiellement, la teneur en vinyle dans le bloc B1 doit être d'environ 5 pour cent en mole à environ 15 pour cent en moles des motifs polybutadiène condensés. Compte tenu des procédés de polymérisation anionique connus du butadiène, typiquement d'environ 7 à environ 15 pour cent en moles des motifs polybutadiène présente la configuration 1,2-addition.

En ce qui concerne le bloc polybutadiène B2, il est préférable qu'il y ait au moins 25 pour cent en moles de vinyle dans le bloc B2. De préférence, la teneur en vinyle dans le bloc B2 est d'environ 25 pour cent en moles à environ 80 pour cent en moles des motifs polybutadiène condensés, mieux encore environ 40 pour cent en mole à environ 75 pour cent en moles des unités polybutadiène ont une configuration 1,2-addition, et même plus préférablement d'environ 50 à environ 65 pour cent en moles des unités de polybutadiène ont une configuration 1,2-addition.

La teneur en monomère hydrocarboné monovinyl aromatique du copolymère (de préférence la teneur en styrène) est d'environ 10% à environ 40% en masse, par rapport à la masse totale du copolymère bloc S-B1-B2 et éventuellement (S-B1-B2)nX. De préférence, la teneur en hydrocarbure monovinyl aromatique (avantageusement le styrène) des copolymères bloc S-B1-B2, et éventuellement (S-B1-B2)nX, est d'environ 18% à environ 35% en masse, plus préférablement d'environ 19% à environ 32% en masse, par rapport à la masse totale du copolymère.

Dans un mode de réalisation préféré de l'invention, l'élastomère comprend un copolymère séquencé répondant à la formule S-B1-B2 seul.

Dans un autre mode de réalisation préféré, S-B1-B2 est utilisé en combinaison avec un copolymère séquencé de formule (S-B1-B2)nX dans lequel chaque S est un bloc hydrocarboné monovinyl aromatique, de préférence le styrène, chaque B1 est un bloc de polybutadiène ayant une teneur en vinyle inférieure ou égale à 15 pour cent en moles, chaque B2 est un bloc de polybutadiène ayant une teneur en vinyle supérieure ou égale à 25 pour cent en moles, n est un nombre entier allant de 2 à 6 et X est le résidu d'un agent de couplage. Lorsque les copolymères séquencés de formule (S-B1-B2)nX sont utilisés, de préférence, n est un nombre entier allant de 2 à 4, avantageusement encore n = 2.

Avantageusement, les copolymères séquencés de l'invention sont sous une forme essentiellement non hydrogénée. Lorsque la composition de copolymère bloc comprend un tel mélange, le rapport massique du copolymère à blocs S-B1-B2 / (S-B1-B2)nX est supérieur ou égal à environ 1: 1. Dans un mode de réalisation particulièrement préféré, le ratio est d'environ 1 : 1 à environ 10: 1 le rapport préféré étant d'environ 1 :1 à environ 4 :1.

La masse moléculaire moyenne en masse de l'élastomère est, avantageusement, comprise entre 10 000 et 600 000 daltons, de préférence entre 30 000 et 400 000 daltons.

Les copolymères blocs mis en œuvre dans l'invention sont décrits dans WO2008/137394. Un procédé pour leur préparation est décrit dans les documents US-3,231,635 ; US-3,251,905 ; US-3,390,207 ; US-3,598,887 ; US-4,219,627 ; EP0413294 ; EP0387671 ; EP 0636654 et WO 94/22931.

La composition peut comprendre d'autres élastomères que les terpolymères à blocs S-B1-B2 et les copolymères (S-B1-B2)nX.

Notamment, la composition selon l'invention peut contenir d'autres élastomères pour bitume connus tels que les copolymères SB (copolymère à blocs du styrène et du butadiène), SBS (copolymère à blocs styrène-butadiène-styrène), SIS (styrène-isoprène-styrène), SBS* (copolymère à blocs styrène-butadiène-styrène en étoile), SBR (styrène-b-butadiène-rubber), EPDM (éthylène propylène diène modifié), polychloroprène, polynorbornène, caoutchouc naturel, caoutchouc recyclé, polybutène, polyisobutylène, SEBS (copolymère du styrène, de l'éthylène, du butylène et du styrène). On peut également citer les élastomères réalisés à partir de monomères styrène et de monomères butadiène permettant une réticulation sans agent réticulant tels que décrits dans les documents WO2007/058994 et par la demanderesse dans la demande de brevet WO2011/013073. Les enseignements décrits dans les demandes WO2007/058994 et WO2011/013073 sont incorporés par référence dans la présente description, notamment les définitions des polymères décrits dans ces deux demandes sont intégrées par référence dans la présente description.

Avantageusement, les terpolymères à blocs S-B1-B2 et les copolymères (S-B1-B2)nX qui ont été définis ci-dessus représentent au moins 50 % en masse des élastomères présents dans la composition, encore plus préférentiellement au moins 70 % en masse. Selon une variante préférée de l'invention, l'élastomère est constitué essentiellement de terpolymères à blocs S-B1-B2 et de copolymères à blocs (S-B1-B2)nX.

La masse moléculaire du copolymère est mesurée par chromatographie CPG avec un étalon polystyrène selon la norme ASTM D5296-05.

La composition peut également comprendre en outre des plastomères.

Notamment, la composition selon l'invention peut également contenir en outre un ou plusieurs composants polymériques choisis dans la catégorie des plastomères pour bitume connus tels que les polyéthylènes PE (polyéthylène), PEHD (polyéthylène haute densité), polypropylène PP, EVA (copolymère polyéthylène-acétate de vinyle), EMA (copolymère polyéthylène-acrylate de méthyle), copolymères d'oléfines et d'esters carboxyliques insaturés, EBA (copolymère polyéthylène-acrylate de butyle), copolymères de l'éthylène et d'esters de l'acide acrylique, méthacrylique ou de l'anhydride maléique, copolymères éthylène-propylène, les ABS (acrylonitrile-butadiène-styrène).

Avantageusement, lorsque la composition selon l'invention comprend au moins un plastomère tel que défini ci-dessus, les terpolymères à blocs S-B1-B2 et les copolymères (S-B1-B2)nX représentent au moins 50 % en masse par rapport à la masse totale de l'ensemble des terpolymères à blocs S-B1-B2, copolymères (S-B1-B2)nX et plastomères présents dans la composition, encore plus préférentiellement au moins 70 % en masse.

Selon une variante de l'invention, la composition peut comprendre en outre des terpolymères à blocs S-B1-B2 et des copolymères (S-B1-B2)nX, au moins un autre élastomère tel que défini ci-dessus et au moins un plastomère tel que défini ci-dessus.

Avantageusement, lorsque la composition selon l'invention comprend en outre au moins un autre élastomère tel que défini ci-dessus et au moins un plastomère tel que défini ci-dessus, les terpolymères à blocs S-B1-B2 et les copolymères (S-B1-B2)nX représentent au moins 50 % en masse par rapport à la masse totale de l'ensemble des terpolymères à blocs S-B1-B2, copolymères (S-B1-B2)nX, élastomères et plastomères présents dans la composition, encore plus préférentiellement au moins 70 % en masse.

### Autres additifs :

On peut également ajouter à la composition bitume/polymère de l'invention, de façon connue :
a) les dopes d'adhésivité et/ou les agents tensioactifs. Ils sont généralement choisis parmi les dérivés d'alkylamines, les dérivés d'alkyl-polyamines, les dérivés d'alkyl amidopolyamines et les dérivés de sels d'ammonium quaternaire, pris seuls ou en mélange. La quantité de dopes d'adhésivité et/ou des agents tensioactifs dans la composition bitume/polymère est, par exemple, comprise entre 0,2% et 2% en masse, de préférence entre 0,5% et 1% en masse par rapport à la masse totale de la composition bitume/polymère.
b) les cires d'origine animale, végétale ou d'hydrocarbures, en particulier des cires hydrocarbonées à chaîne longue, par exemple des cires de polyéthylène ou des paraffines, éventuellement oxydées. Les cires amides telles que l'éthylène bis-stéaramide pourront aussi être ajoutées.
c) les paraffines présentant des longueurs de chaînes de 30 à 120 atomes de carbone (C₃₀ à C₁₂₀). Les paraffines sont choisies parmi les polyalkylènes. De préférence, les paraffines sont des paraffines de polyméthylène et des paraffines de polyéthylène. Ces paraffines pourront être d'origine pétrolière ou provenir de l'industrie chimique. De préférence, les paraffines sont des paraffines synthétiques issues de la conversion de la biomasse et/ou du gaz naturel.

Ces paraffines peuvent également contenir une grande proportion de paraffines dites « normales » c'est-à-dire de paraffines linéaires à chaîne droite, non ramifiées (hydrocarbures saturés). Ainsi, les paraffines peuvent comprendre de 50 à 100% de paraffines normales et de 0 à 50% d'isoparaffines et/ou de paraffines ramifiées. Préférentiellement, les paraffines comprennent de 85 à 95% de paraffines normales et de 5 à 15% d'isoparaffines et/ou de paraffines ramifiées. Plus préférentiellement, les paraffines comprennent de 50 à 100% de paraffines normales et de 0 à 50% d'isoparaffines. Préférentiellement, les paraffines comprennent de 85 à 95% de paraffines normales et de 5 à 15% d'isoparaffines.

Avantageusement, les paraffines sont des paraffines de polyméthylène. Plus particulièrement, les paraffines sont des paraffines synthétiques de polyméthylène, notamment des paraffines issues de la conversion de gaz de synthèse par le procédé Fischer-Tropsch. Dans le procédé Fischer-Tropsch, les paraffines sont obtenues par réaction de l'hydrogène avec de l'oxyde de carbone sur un catalyseur métallique. Des procédés de synthèse Fischer-Tropsch sont décrits par exemple dans les publications EP 1 432 778, EP 1 328 607 ou EP 0 199 475.

De préférence, les paraffines sont des paraffines de polyméthylène Fischer-Tropsch commercialisées par Sasol, en particulier sous la marque Sasobit®.
d) les fluxants tels que des huiles à base de matières grasses animales et/ou végétales ou des huiles hydrocarbonées d'origine pétrolière. Les huiles d'origine animale et/ou végétale pourront être sous forme d'acides gras libres, de triglycérides, de diglycérides, de monoglycérides, sous forme estérifiée, par exemple sous forme d'ester méthylique.
e) les résines d'origine végétale telles que les colophanes.
f) les additifs anti-mousse, notamment (mais non limitativement) choisis parmi les polysiloxanes, les polysiloxanes oxyalkylés, et les amides d'acides gras issus d'huiles végétales ou animales.
g) les additifs détergents et/ou anti-corrosion, notamment (mais non limitativement) choisis dans le groupe constitué par les amines, les succinimides, les alkénylsuccinimides, les polyalkylamines, les polyalkyles polyamines et les polyétheramines; les imidazolines.
h) les additifs de lubrifiance ou agent anti-usure, notamment (mais non limitativement) choisi dans le groupe constitué par les acides gras et leurs dérivés ester ou amide, notamment le monooléate de glycérol, et les dérivés d'acides carboxyliques mono- et polycycliques.
i) les additifs modificateurs de la cristallisation, les additifs inhibiteurs de dépôts de paraffines, les additifs abaisseurs du point d'écoulement ; les modificateurs de la rhéologie à basse température tels que les copolymères éthylène/vinyl acétate (EVA) et/ou éthylène/vinyl propionate (EVP), les terpolymères éthylène/ acétate de vinyle/ versatate de vinyle (EA/AA/EOVA) ; les terpolymères éthylène/ acétate de vinyle/ acrylate d'alkyle ; les copolymères EVA modifiés par greffage ; les polyacrylates ; les terpolymères acrylates/acétate de vinyle/anhydride maléique ; les copolymères anhydride maléique/alkyl(méth)acrylate amidifiés susceptibles d'être obtenus par réaction d'un copolymère anhydride maléique/alkyl(méth)acrylate et d'une alkylamines ou polyalkylamine ayant une chaîne hydrocarbonée de 4 et 30 atomes de carbone, de préférence, de 12 à 24 atomes de carbone ; les copolymères d'alpha-oléfine/anhydride maléique amidifiés susceptibles d'être obtenus par réaction d'un copolymère d'alpha-oléfine/anhydride maléique et d'une alkylamine ou polyalkylamine, l'alpha-oléfine pouvant être choisi parmi les alpha-oléfine en C10-C50, de préférence, en C16-C20 et l'alkylamine ou la polyalkylamine ayant, avantageusement, une chaîne hydrocarbonée de 4 à 30 atomes de carbone, de préférence de 12 à 24 atomes de carbone.
j) les antioxydants, par exemple de type phénoliques encombrés ou aminés de type paraphénylène diamine alkylés.
k) les passivateurs de métaux.
1) les neutralisateurs d'acidité.
m) les additifs permettant d'abaisser la température de mélange des asphaltes et des enrobés, ceux permettant d'améliorer l'adhésion des liants bitumineux sur les charges et les granulats, comme par exemple les polyisobutylène succinimides.
n) les acides tels que l'acide polyphosphorique ou les diacides, en particuliers des diacides gras.

Les additifs sont mis en œuvre suivant les quantités bien connues de l'homme du métier, en fonction de la nature de l'additif, en fonction de la base bitume et des propriétés attendues.

Lorsqu'elle comprend un ou plusieurs additifs, la base bitume comprend de 0,1% à 10% en masse, de préférence de 0,5% à 5% en masse, plus préférentiellement de 0,5% à 2,5% en masse d'additif chimique par rapport à la masse totale de la base bitume.

### La composition :

De façon avantageuse, la composition bitume/polymère comprend :
- du bitume,
- de 0,5% à 20% en masse d'au moins un élastomère tel que défini ci-dessus,
- de 0,05% à 2,5% en masse d'au moins un adjuvant polymère oléfinique tel que défini ci-dessus,
- de 0 à 5 % d'additifs.

Encore plus avantageusement, la composition bitume/polymère comprend :
- du bitume,
- de 0,5% à 15% en masse d'au moins un élastomère tel que défini ci-dessus,
- de 0,15 à 2% en masse d'au moins un adjuvant polymère oléfinique tel que défini ci-dessus,
- de 0 à 5 % d'additifs.

De façon avantageuse, la composition bitume/polymère est essentiellement constituée de :
- bitume,
- de 0,5% à 20% en masse d'au moins un élastomère tel que défini ci-dessus,
- de 0,05% à 2,5% en masse d'au moins un adjuvant polymère oléfinique tel que défini ci-dessus,
- de 0 à 5% d'additifs.

De façon encore préférée, la composition bitume/polymère est essentiellement constituée de :
- bitume,
- de 0,5% à 15% en masse d'au moins un élastomère tel que défini ci-dessus,
- de 0,15 à 2% en masse d'au moins un adjuvant polymère oléfinique tel que défini ci-dessus,
- de 0 à 5% d'additifs.

Les pourcentages massiques sont calculés par rapport à la masse totale de ladite composition.

Selon l'invention, le ratio massique élastomère/ adjuvant polymère oléfinique est avantageusement de 15/1 à 2/1, de préférence de 12/1 à 5/2.

### Le procédé de fabrication :

Les compositions bitume/polymère de l'invention peuvent être préparées par tout procédé connu de l'homme du métier. En règle générale ces procédés comprennent le mélange des composants et le chauffage du mélange. Le bitume peut être chauffé avant mélange. Habituellement, le bitume est chauffé avant mélange, et les autres composants sont additionnés au bitume sans avoir été préalablement chauffés.

Selon un mode de réalisation particulier de l'invention, on prépare une composition bitume/polymère en mettant en contact :
- du bitume,
- de 0,5% à 20% en masse, de préférence de 0,5% à 15% en masse d'au moins un élastomère,
- de 0,05% à 2,5% en masse, de préférence de 0,15 à 2% en masse d'au moins un adjuvant polymère oléfinique,
- éventuellement des additifs.

Les pourcentages massiques sont calculés par rapport à la masse totale de ladite composition.

On opère à des températures allant de 100°C à 200°C, de préférence de 150°C à 200°C, plus préférentiellement de 160°C à 200°C, et sous agitation pendant une durée d'au moins 10 minutes, de préférence comprise de 1 heure à 24 heures, plus préférentiellement de 1 heures à 10 heures.

Le procédé de l'invention peut être mis en œuvre au moyen d'une agitation produisant un fort cisaillement ou d'une agitation produisant un faible cisaillement. Le procédé de l'invention peut comporter des séquences successives avec des modes d'agitation différents, par exemple le procédé de l'invention peut comporter au moins deux séquences successives d'agitation, une première séquence produisant une agitation à fort cisaillement suivie d'une seconde séquence produisant une agitation à faible cisaillement.

Selon un mode de réalisation préféré, le procédé de fabrication de la composition bitume/polymère réticulé comprend, par exemple, les étapes successives suivantes :
i) on introduit dans un réacteur le bitume, l'élastomère thermoréticulable et l'adjuvant polymère oléfinique, éventuellement les additifs,
ii) le mélange est agité jusqu'à obtention d'un mélange homogène et chauffé à une température allant de 100°C à 200°C, de préférence de 150°C à 200°C, plus préférentiellement de 160°C à 200°C, pendant une durée d'au moins 10 minutes, de préférence de 1 heure à 24 heures, plus préférentiellement de 1 heure à 10 heures.

Dans la mise en œuvre décrite ci-dessus, l'adjuvant polymère oléfinique peut être incorporé au bitume avant ou après l'élastomère thermoréticulable, une incorporation simultanée pouvant être également envisagée.

L'ordre d'introduction des différents constituants n'a pas d'influence significative sur les propriétés mécaniques de la composition bitume/polymère ainsi obtenue.

En particulier, l'adjuvant polymère oléfinique est incorporé au bitume avant ou après l'élastomère.

En particulier également, l'adjuvant polymère oléfinique et l'élastomère sont incorporés au bitume.

Selon un autre mode de réalisation préféré, le procédé de fabrication de la composition bitume/polymère réticulé comprend, par exemple, les étapes successives suivantes :
i) on introduit dans un réacteur le bitume, l'élastomère thermoréticulable et l'adjuvant polymère oléfinique, éventuellement les additifs,
ii) le mélange est agité à une température allant de 100°C à 200°C, de préférence de 150°C à 200°C, plus préférentiellement de 160°C à 200°C, pendant une durée d'au moins 1 minute, de préférence entre 1 min et 2 heures, plus préférentiellement entre 1 min et 30 min, puis homogénéisé par passage dans un moulin à fort cisaillement,
iii) le mélange obtenu à l'étape ii) est ensuite transféré dans un bac de maturation pendant une durée d'au moins 30 min, de préférence de 30 min à 24 heures, plus préférentiellement de 1 heure à 10 heures avant son stockage ou son emploi.

De manière préférée, l'agitation à un fort cisaillement, et notamment l'agitation réalisée par passage dans un moulin à fort cisaillement, permet de faciliter la bonne dispersion et la bonne distribution du polymère et de l'adjuvant polymère oléfinique.

### Mise en œuvre des compositions bitume/polymère selon l'invention :

Diverses utilisations des compositions bitume/polymère obtenues selon l'invention sont envisagées. En particulier, les compositions bitume/polymère peuvent être utilisées pour la préparation d'un liant bitume/polymère. Le liant bitume/polymère selon l'invention peut être employé en association avec des granulats, notamment routiers.

S'agissant des applications routières, l'invention vise notamment des enrobés bitumineux comme matériaux pour la construction et l'entretien des corps de chaussée et de leur revêtement, ainsi que pour la réalisation de tous travaux de voiries.

Par enrobé bitumineux, on entend un mélange d'un liant bitumineux avec des granulats et éventuellement des charges minérales et/ou synthétiques.

L'enrobé bitumineux comprend un liant bitume/polymère selon l'invention, et éventuellement des charges minérales et/ou synthétiques, de préférence choisies parmi des fines, du sable, des gravillons et des fraisats de recyclage. Les granulats sont des granulats minéraux et/ou synthétiques, notamment, des fraisats de recyclage, de dimensions supérieures à 2 mm, de préférence comprises entre 2 mm et 20 mm.

Le liant bitume/polymère selon l'invention peut, avantageusement, être utilisé pour préparer un enduit superficiel, un enrobé à chaud, un enrobé tiède, un enrobé à froid, un enrobé coulé à froid ou une grave émulsion.

S'agissant des applications routières, l'invention vise également des asphaltes comme matériaux pour fabriquer et recouvrir des trottoirs.

Par asphalte, on entend, un mélange de liant bitumineux avec des charges minérales et/ou synthétiques.

Un asphalte comprend un liant bitume/polymère selon l'invention et des charges minérales telles que des fines, du sable ou des gravillons et/ou des charges synthétiques. Les charges minérales sont constituées de fines (particules de dimensions inférieures à 0,063 mm), de sable (particules de dimensions comprises entre 0,063 mm et 2 mm) et éventuellement de gravillons (particules de dimensions supérieures à 2 mm, de préférence comprises entre 2 mm et 4 mm).

Les asphaltes présentent 100% de compacité et sont principalement utilisés pour fabriquer et recouvrir des trottoirs, alors que les enrobés possèdent une compacité inférieure à 100% et sont utilisés pour fabriquer des routes. Contrairement aux enrobés, les asphaltes ne sont pas compactés au rouleau lors de leur mise en place.

Un autre aspect de l'invention est l'utilisation d'une composition bitume/polymère dans diverses applications industrielles, notamment pour préparer un revêtement d'étanchéité, une membrane ou une couche d'imprégnation.

S'agissant des applications industrielles des compositions bitumineuses selon l'invention, on peut citer la fabrication de membranes d'étanchéité, de membranes antibruit, de membranes d'isolation, des revêtements de surface, des dalles de moquette, des couches d'imprégnation.

L'invention a aussi pour objet, l'utilisation de liants bitume/polymère, d'enrobés et d'asphaltes coulés selon l'invention pour la fabrication de revêtements de routes, de chaussées, de trottoirs, de voiries, d'aménagements urbains, de sols, d'étanchéité de bâtiments ou d'ouvrages, en particulier pour la fabrication en application routière, de couches de fondation, de couches de base, de couches d'assise, de couches de surface telles que les couches de liaison et/ou les couches de roulement.

### Partie expérimentale :

### A- Matériel et méthodes

Les propriétés des bitumes sont mesurées au moyen des méthodes décrites ci-dessous :
- Pénétrabilité à l'aiguille à 25°C (P25) : unité = 1/10mm, norme EN 1426.
- Température de ramollissement bille et anneaux (TBA) : unité = °C, norme EN1427.
- Retour élastique à 25°C (R25) : unité = %, norme EN 13398.
- Essai de traction à 5°C, 100mm/min (ε max représente l'élongation maximale à la rupture) : unité = %, norme EN 13587.
- Stabilité : on évalue la stabilité au stockage en mesurant la différence de pénétrabilité et la différence de TBA après 3 jours de stockage à 180°C.

### Matières premières :

- Base Bitume (B) : on a utilisé une base bitume de grade 35/50 ayant une pénétrabilité P₂₅ de 37 1/10 mm et une TBA de 52,6°C et disponible commercialement auprès du groupe TOTAL sous la marque AZALT®.
- Base Bitume (B1) : on a utilisé une base bitume de grade 35/50 ayant une pénétrabilité P₂₅ de 39 1/10 mm et une TBA de 53,0°C et disponible commercialement auprès du groupe TOTAL sous la marque AZALT®.
- Base Bitume (B2) : on a utilisé une base bitume de grade 70/100 ayant une pénétrabilité P₂₅ de 75 1/10 mm et une TBA de 45,4°C et disponible commercialement auprès du groupe TOTAL sous la marque AZALT®.
- Base Bitume (B3) : on a utilisé une base bitume de grade 10/20 ayant une pénétrabilité P₂₅ de 14 1/10 mm et une TBA de 66,6°C et disponible commercialement auprès du groupe TOTAL sous la marque MODULOTAL®.
- Base Bitume (B4) : on a utilisé une base bitume de grade 70/100 ayant une pénétrabilité P₂₅ de 77 1/10 mm et une TBA de 46°C et disponible commercialement auprès du groupe TOTAL sous la marque AZALT®.
- Base Bitume (B5) : on a utilisé une base bitume de grade 35/50 ayant une pénétrabilité P₂₅ de 37 1/10 mm et une TBA de 53,2°C et disponible commercialement auprès du groupe TOTAL sous la marque AZALT®.
- Base Bitume (B6) : on a utilisé une base bitume de grade 50/70 ayant une pénétrabilité P₂₅ de 55 1/10 mm et une TBA de 49,6°C et disponible commercialement auprès du groupe TOTAL sous la marque AZALT®.
- Base Bitume (B7) : on a utilisé une base bitume de grade 160/220 ayant une pénétrabilité P₂₅ de 176 1/10 mm et une TBA de 39,0°C et disponible commercialement auprès du groupe TOTAL sous la marque AZALT®.
- Adjuvant Polymère (Adj) : Terpolymère éthylène/acrylate de butyle/méthacrylate de glycidyle dans des proportions massiques, respectivement de 70/21/9 et possédant un indice de fusion MFR (acronyme anglais pour « Melt Flow Rate ») (190°C/2,16 kg) de 8g/10min, calculé selon la norme ASTM D1238- ISO1133. Ce polymère est disponible commercialement sous le nom Elvaloy ® 4170 auprès de la société Dupont.
- Elastomère (E) : on a utilisé un mélange à base de terpolymère séquencé S-B1-B2 comprenant également du copolymère (S-Bl-B2)nX avec S représente un bloc hydrocarboné monovinyl aromatique ayant un poids moléculaire de pic de 10 000 à 25 000, B1 est un bloc polybutadiène ayant une teneur en vinyle inférieure ou égale à 15 pour cent en mole, B2 est un bloc polybutadiène ayant une teneur en vinyle supérieure ou égale à 25 pour cent en moles, le rapport de B1/B2 est supérieur ou égal à 1: 1, le copolymère à blocs S-B1-B2 a un poids moléculaire de pic de 40 000 à 200 000, n est un nombre entier allant de 2 à 6, X est le résidu d'un agent de couplage, le copolymère bloc (S-B1-B2)nX a un poids moléculaire de pic qui est de 1,5 à 6,0 fois le poids moléculaire de pic du copolymère bloc S-B1-B2, dans lequel le rapport en masse S-B1-B2 /(S-B1-B2)nX est supérieur ou égal à 1: 1. La teneur en groupement vinyle du mélange est de 20,2% en masse par rapport à la masse totale du mélange de polymères. La masse moléculaire moyenne en poids du mélange est de 235 000 Daltons. Cet élastomère est disponible auprès de la société Kraton.
- Elastomère (E1) : on a utilisé un copolymère séquencé styrène/butadiène/styrène (SBS), à 30,5% en poids de styrène et à 69,5% en poids de butadiène. La teneur en groupement 1,2-vinyle est de 27,8 % en poids par rapport au poids total de copolymère. Le copolymère a une masse moléculaire en poids (Mw) de 142 500 Daltons et un indice de polydispersité Iₚ de 1,09. Ce copolymère est disponible commercialement auprès de la société KRATON sous le nom D1192.

### B- Préparation des compositions bitume/polymère :

On a préparé les compositions C1 à C5, C13 et C14 correspondant aux mélanges détaillés ci-dessous dans les tableaux 1 et 1 bis avec la durée de réaction indiquée.

Le procédé comprend les étapes suivantes :
- Mélange des composants à 180°C.
- Introduction des composants dans un réacteur Silverson ® et agitation pendant 15 minutes pour obtenir un mélange homogène.
- Ensuite le mélange est agité pendant 6h : à 400 tour/min à 180°C.

On a préparé la composition C9 correspondant au mélange détaillé ci-dessous dans le tableau 1 bis avec la durée de réaction indiquée.

Le procédé comprend les étapes suivantes :
- Mélange des composants à 180°C.
- Introduction des composants dans un réacteur Silverson ® et agitation pendant 3 heures pour obtenir un mélange homogène.
- Ensuite le mélange est agité pendant 2h : à 400 tour/min à 180°C

On a préparé les compositions C6 à C8 et C10 à C12 correspondant aux mélanges détaillés ci-dessous dans les tableaux 1 et 1 bis avec la durée de réaction indiquée.

Le procédé comprend les étapes suivantes :
- Mélange des composants à 180°C.
- Introduction des composants dans un réacteur Silverson ® et agitation pendant 3 heures pour obtenir un mélange homogène à 180°C,
- ensuite le mélange est agité pendant 2 heures à 400 tour/min et à 180°C,
- le mélange ainsi obtenu est dilué avec une base bitume préalablement portée à une température de 180°C, puis le mélange est soumis à une agitation de 400 tour/min à 180°C pendant 1 heure.

Les quantités indiquées dans les tableaux sont des pourcentages massiques rapportés à la masse totale de la composition. Les compositions C1, C2, C13 et C14 sont comparatives, les compositions C3 à C12 sont selon l'invention.

**Tableau 1 : compositions préparées C1 à C7**

| Composition | C1 | C2 | C3 | C4 | C5 | C6 | C7 |
|---|---|---|---|---|---|---|---|
| B | 97,5 | 96,5 | 97,25 | 96 | - | - | - |
| B1 | - | - | - | - | 96,72 | - | - |
| B2 | - | - | - | - | - | 57,15 | - |
| B3 | - | - | - | - | - | 40 | 40 |
| B4 | - | - | - | - | - | - | 56,62 |
| B5 | - | - | - | - | - | - | - |
| B6 | - | - | - | - | - | - | - |
| B7 | - | - | - | - | - | - | - |
| E | 2,5 | 3,5 | 2,5 | 3 | 2,85 | 2,58 | 2,94 |
| E1 | - | - | - | - | - | - | - |
| Adj | - | - | 0,25 | 1 | 0,43 | 0,27 | 0,44 |
| Durée de réaction | 6h | 6h | 6h | 6h | 6h | 6h | 6h |

**Tableau 1bis : compositions préparées C8 à C14**

| Composition | C8 | C9 | C10 | C11 | C12 | C13 | C14 |
|---|---|---|---|---|---|---|---|
| B | - | - | - | - | - | - | - |
| B1 | - | - | - | - | - | 96,72 | 96,55 |
| B2 | - | - | - | - | - | - | - |
| B3 | - | - | - | - | - | - | - |
| B4 | - | 94,3 | 51,87 | - | 34 | - | - |
| B5 | 97,15 | - | - | 96,48 | - | - | - |
| B6 | - | - | 45 | - | - | - | - |
| B7 | - | - | - | - | 62,83 | - | - |
| E | 2,58 | 5 | 2,75 | 3 | 2,77 | - | - |
| E1 | - | - | - | - | - | 2,85 | 3,2 |
| Adj | 0,27 | 0,7 | 0,38 | 0,52 | 0,4 | 0,43 | 0,43 |
| Durée de réaction | 6h | 5h | 6h | 6h | 6h | 6h | 6h |

### C- Procédé industriel de fabrication de composition bitume/polymère selon l'invention à haut cisaillement et en ligne continu :

Une composition bitume/polymère C15 a été préparée au moyen d'un procédé industriel à haut cisaillement et en ligne continu en mélangeant à une température comprise entre 185 et 195°C et à haut cisaillement :
- 97,07 % d'une base bitume de grade 35/50 ayant une pénétrabilité P₂₅ de 42 1/10 mm et une TBA de 52°C (disponible commercialement auprès du groupe TOTAL sous la marque AZALT®),
- 2,57% du polymère E et
- 0,36% de Adj ; les pourcentages étant donnés en poids massiques par rapport au poids total de la composition.

Le mélange ainsi obtenu est ensuite mélangé pendant 4h à une température comprise entre 185 et 195°C.

### D- Procédé industriel de fabrication de composition bitume/polymère selon l'invention par broyage avec recirculation externe :

Une composition bitume/polymère C16 a été préparée au moyen d'un procédé industriel par broyage avec recirculation externe en mélangeant pendant 3 heures à une température de 195°C :
- 96,72 % en poids d'une base bitume de grade 30/45 ayant une pénétrabilité P₂₅ de 36 1/10 mm et une TBA de 54,6°C (disponible commercialement auprès du groupe TOTAL sous la marque AZALT®),
- 2,85% en poids du polymère E et
- 0,43% en poids de Adj ; les pourcentages étant donnés en poids massiques par rapport au poids total de la composition.

Le mélange ainsi obtenu est ensuite mélangé pendant 2h à une température de 195°C.

### E- Résultats :

Les compositions sont testées suivant les méthodes explicitées ci-dessus. Les résultats sont rapportés dans le tableau 2 :

**Tableau 2 : propriétés des compositions préparées C1 à C8**

| Composition | | C1 | C2 | C3 | C4 | C5 | C6 | C7 | C8 |
|---|---|---|---|---|---|---|---|---|---|
| Pénétrabilité (dmm) | | 31 | 32 | 33 | 31 | 34 | 33 | 32 | 33 |
| TBA (°C) | | 57,6 | 63,8 | 58,4 | 62,6 | 60,4 | 60 | 62,2 | 57,8 |
| Retour élastique (%) | | 66 | 86 | 71 | 77 | 74 | 70 | 76 | 67 |
| Traction à 5°C | Energie à 400% (J/cm²) | - | - | 17,51 | 18,46 | 21,9 | 19,4 | 22,1 | 21,7 |
| | Elongation Max (%) | 59 | 305 | 700 | 700 | 688 | 700 | 687 | 700 |
| Stabilité stockage 3j à 180°C | Δ Pénétrabilité (dmm) | 3 | 12 | 1 | 3 | 1 | 0 | 0 | 0 |
| | Δ TBA (°C) | 0,2 | 21,8 | 0,8 | 3,4 | 1 | 0,6 | 0,2 | 0 |

| | | | | | | | | | |
|---|---|---|---|---|---|---|---|---|---|
| ND : non déterminée | | | | | | | | | |

**Tableau 2 bis : propriétés des compositions préparées C9 à C16**

| Composition | | C9 | C10 | C11 | C12 | C13 | C14 | C15 | C16 |
|---|---|---|---|---|---|---|---|---|---|
| Pénétrabilité (dmm) | | 48 | 53 | 30 | 95 | 33 | 34 | 37 | 33 |
| TBA (°C) | | 89,5 | 61,2 | 62,4 | 49,8 | 59,2 | 60,8 | 60 | 64 |
| Retour élastique (%) | | 95 | ND | 76 | 69 | 62,8 | 75 | 76 | 78 |
| Traction à 5°C | Energie à 400% (J/cm²) | 15,25 | 14,08 | 22,46 | 6,52 | 22,51 | 22,48 | 22,15 | 19,8 |
| | Elongation Max (%) | 700 | 700 | 700 | 700 | 295 | 457 | 682 | 695 |
| Stabilité stockage 3j à 180°C | Δ Pénétrabilité (dmm) | 1 | 0 | 0 | 1 | 2 | 1 | 1 | 0 |
| | Δ TBA (°C) | 0,5 | 0,2 | 0,8 | 0,2 | 0 | 0,8 | 0,8 | 0,4 |

| | | | | | | | | | |
|---|---|---|---|---|---|---|---|---|---|
| ND : non déterminée | | | | | | | | | |

On constate un effet de synergie entre le polymère séquencé selon l'invention et l'adjuvant polymère oléfinique, qui permet d'obtenir une amélioration des propriétés mécaniques très significative notamment des propriétés élastiques, en particulier de traction à 5°C, avec des quantités très faibles de système polymère séquencé/adjuvant. Cet effet de synergie entre le polymère séquencé et l'adjuvant polymère oléfinique permet également d'obtenir une amélioration significative de la stabilité au stockage à chaud, notamment une stabilité au stockage à 180°C, de la composition bitume/polymère avec des quantités très faibles de système polymère séquencé/adjuvant.

De plus, on constate qu'il n'y a pas d'effet de synergie entre le polymère séquencé E1 et l'adjuvant polymère oléfinique car les propriétés de traction à 5°C, avec des quantités très faibles de système polymère séquencé/adjuvant sont inférieures à 500%.

Par conséquent, il est démontré que l'association du polymère séquencé et de l'adjuvant polymère oléfinique selon l'invention permet d'obtenir une amélioration des propriétés mécaniques très significative notamment des propriétés élastiques, en particulier de traction à 5°C, avec des quantités très faibles de système polymère séquencé/adjuvant.

### F- Préparation d'enrobés bitumineux et mesure de leurs propriétés mécaniques :

Un enrobé bitumineux (EB1) est respectivement obtenu à partir de la composition C16 selon l'invention et de granulats présentant la coupe granulaire décrite dans le tableau 3 :

**Tableau 3 : Composition granulométrique**

| | | | | | |
|---|---|---|---|---|---|
| Coupe (mm) | 0/2 | 2/4 | 4/6 | 6/10 | Filler |
| Poids (%) | 39 | 10 | 12 | 38 | 1 |

L'enrobé bitumineux (EB1) est préparé de la manière suivante :
- Les granulats sont portés à la température de 175°C pendant une durée de 8h environ,
- La composition bitumineuse C16 est chauffée à 175°C puis versée sur les granulats préalablement chauffés, le mélange ainsi obtenu est malaxé pendant environ 90 secondes à 175°C.

L'enrobé bitumineux ainsi obtenu présente une teneur en composition bitumineuse C16 de 5,7% en masse par rapport à la masse totale de l'enrobé.

Un enrobé bitumineux est caractérisé comme un béton bitumineux à module élevé pour couche de roulement ou liaison type EB 10, également appelé BBME de classe 3 selon la norme NF EN 13108-1, s'il présente au moins les caractéristiques suivantes décrites dans le tableau 4 :

**Tableau 4 : propriétés mécanique de l'enrobé bitumineux (EB1)**

| | Enrobé EB1 | Spécifications BBME classe 3, selon norme EN 13108-1 |
|---|---|---|
| Essai Duriez à 18°C⁽¹⁾ (r/R) | 0,89 | ≥ 0,8 |
| Essai d'orniérage à 30 000 cycles (%)⁽²⁾ | 1,7 | <5 |
| Essai de module complexe à 15°C et à 10Hz (MPa)⁽³⁾ | 11 500 | ≥ 11 000 |
| Essai de fatigue (µdef pour 10⁶ cycles)⁽⁴⁾ | 199 | ≥100 |

| | | |
|---|---|---|
| ⁽¹⁾ Essai de résistance au désenrobage à l'eau selon la norme EN 12697-12, reflétant l'adhésion entre la composition bitume/polymère et les granulats. ⁽²⁾ Essai de résistance à l'orniérage selon la norme EN 12697-22, reflétant la capacité de l'enrobé bitumineux à résister au fluage lié à l'application du trafic. ⁽³⁾ Mesure du module complexe de rigidité selon la norme NF EN 12697-26, reflétant la capacité de l'enrobé bitumineux à supporter les efforts. ⁽⁴⁾ Essai de résistance à la fatigue par flexion 2 points selon la norme EN 12697-24, reflétant la capacité de l'enrobé bitumineux à maintenir intactes les propriétés de l'enrobé bitumineux en fonction de la répétition de l'application des charges. | | |

L'enrobé bitumineux EB1 obtenu à partir de la composition C16 selon l'invention présente des propriétés mécaniques remplissant les conditions d'utilisation de cet enrobé en tant que BBME de classe 3 pour la fabrication de couches de roulement ou de liaison soumises à fortes sollicitations de trafic

## Revendications

1. Composition bitume/polymère comprenant :
- du bitume,
- au moins un élastomère, et
- au moins un adjuvant polymère oléfinique fonctionnalisé par au moins des groupements fonctionnels glycidyle,
**caractérisée en ce que** :
• l'élastomère est choisi parmi les copolymères bloc thermoréticulables de formule S-B1-B2, dans laquelle S représente un bloc hydrocarboné monovinyl aromatique ayant un poids moléculaire de pic de 10 000 à 25 000, B1 est un bloc polybutadiène ayant une teneur en vinyle inférieure ou égale à 15 pour cent en mole, B2 est un bloc polybutadiène ayant une teneur en vinyle supérieure ou égale à 25 pour cent en moles, le rapport en masse B1/B2 est supérieur ou égal à 1: 1, et dans lequel le copolymère à blocs S-B1-B2 a un poids moléculaire de pic de 40 000 à 200 000 ;
• l'élastomère peut comprendre en outre au moins un copolymère bloc thermoréticulable répondant à la formule (S-B1-B2)nX dans laquelle chaque S représente un bloc hydrocarboné monovinyl aromatique ayant un poids moléculaire de pic de 10 000 à 25 000, chaque B1 représente un bloc polybutadiène ayant une teneur en vinyle inférieure ou égale à 15 pour cent en moles, chaque B2 représente un bloc polybutadiène ayant une teneur en vinyle supérieure ou égale à 25 pour cent en mole, n est un nombre entier allant de 2 à 6, et X est le résidu d'un agent de couplage, dans laquelle le rapport en masse B1/B2 est supérieur ou égal à 1: 1, et le copolymère bloc (S-B1-B2)nX a un poids moléculaire de pic qui est de 1,5 à 6,0 fois le poids moléculaire de pic du copolymère bloc S-B1-B2 ;
et le ratio massique élastomère/adjuvant dans la composition va de 15/1 à 2/1.

2. Composition selon la revendication 1, dans laquelle le rapport en masse :
S-B1-B2/(S-B1-B2)nX
est supérieur ou égal à 1: 1, de préférence de 1: 1 à 10: 1, et encore mieux de 1: 1 à 4: 1.

3. Composition selon la revendication 1 ou la revendication 2, dans laquelle S représente le styrène.

4. Composition selon l'une quelconque des revendications précédentes, qui comprend de 0,5% à 20% en masse d'élastomère par rapport à la masse totale de la composition, de préférence de 0,5 à 15%.

5. Composition selon l'une quelconque des revendications précédentes, qui comprend de 0,05% à 2,5% en masse d'adjuvant polymère oléfinique par rapport à la masse totale de la composition, de préférence de 0,15 à 2%.

6. Composition selon l'une quelconque des revendications précédentes, dans laquelle l'adjuvant polymère oléfinique est choisi dans le groupe consistant en :
(a) les copolymères, statistiques ou séquencés, d'éthylène et d'un monomère choisi parmi l'acrylate de glycidyle et le méthacrylate de glycidyle, comprenant de 50% à 99,7% en masse d'éthylène;
(b) les terpolymères, statistiques ou séquencés, d'éthylène, d'un monomère A choisi parmi l'acétate de vinyle et les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène ; et
(c) les copolymères résultant du greffage d'un monomère B choisi parmi l'acrylate de glycidyle et le méthacrylate de glycidyle, sur un substrat consistant en un polymère choisi parmi les polyéthylènes, les polypropylènes, les copolymères statistiques ou séquencés d'éthylène et d'acétate de vinyle et les copolymère statistiques ou séquencés d'éthylène et d'acrylate ou méthacrylate d'alkyle en C₁ à C₆, comprenant de 40% à 99,7% en masse d'éthylène, lesdits copolymères greffés comprenant de 0,5% à 15% en masse de motifs greffés issus du monomère B,
(d) les mélanges d'au moins deux composés (a), (b) et (c).

7. Composition selon la revendication 6, dans laquelle l'adjuvant polymère oléfinique est choisi parmi les terpolymères statistiques ou séquencés d'éthylène, d'un monomère A choisi parmi l'acétate de vinyle et les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène.

8. Composition selon la revendication 7, dans laquelle l'adjuvant polymère oléfinique est choisi parmi les terpolymères statistiques d'éthylène, d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène.

9. Procédé de préparation d'une composition bitume/polymère selon l'une quelconque des revendications 1 à 8, **caractérisé en ce qu'**on met en contact, en opérant à des températures comprises entre 100°C et 200°C et sous agitation pendant une durée d'au moins 10 minutes :
- du bitume,
- de 0,5% à 20% en masse d'au moins un élastomère,
- de 0,05% à 2,5% en masse d'au moins un adjuvant polymère oléfinique,
- éventuellement des additifs.

10. Asphalte **caractérisé en ce qu'**il comprend au moins une composition bitume/polymère selon l'une quelconque des revendications 1 à 8, et des charges minérales et/ou synthétiques.

11. Enrobé bitumineux **caractérisé en ce qu'**il comprend au moins une composition bitume/polymère selon l'une quelconque des revendications 1 à 8, des granulats, et éventuellement des charges minérales et/ou synthétiques.

12. Utilisation d'au moins une composition bitume/polymère selon l'une quelconque des revendications 1 à 8 pour préparer un enduit superficiel, un enrobé à chaud, un enrobé tiède, un enrobé à froid, un enrobé coulé à froid, une grave émulsion, ledit liant étant associé à des granulats et/ou des fraisats de recyclage.

13. Utilisation d'au moins une composition bitume/polymère selon l'une quelconque des revendications 1 à 8, pour préparer un revêtement d'étanchéité, une membrane ou une couche d'imprégnation.

## Patentansprüche

1. Bitumen-/Polymerzusammensetzung, umfassend:
- Bitumen,
- mindestens ein Elastomer, und
- mindestens ein Olefinpolymer-Adjuvans, das mindestens mit funktionellen Glycidylgruppen funktionalisiert ist,
**dadurch gekennzeichnet, dass**
• das Elastomer ausgewählt ist aus thermovernetzbaren Blockcopolymeren mit der Formel S-B1-B2, wobei S einen aromatischen Monovinylkohlenwasserstoffblock mit einem maximalen Molekulargewicht von 10 000 bis 25 000 darstellt, B1 ein Polybutadienblock mit einem Vinylgehalt kleiner oder gleich 15 Molprozent ist, B2 ein Polybutadienblock mit einem Vinylgehalt größer oder gleich 25 Molprozent ist, das Massenverhältnis B1/B2 größer oder gleich 1:1 ist, und wobei das Blockcopolymer S-B1-B2 ein maximales Molekulargewicht von 40 000 bis 200 000 aufweist;
• das Elastomer außerdem mindestens ein thermovernetzbares Blockcopolymer mit der Formel (S-B1-B2)nX umfassen kann, wobei jedes S einen aromatischen Monovinylkohlenwasserstoffblock mit einem maximalen Molekulargewicht von 10 000 bis 25 000 darstellt, jedes B1 einen Polybutadienblock mit einem Vinylgehalt kleiner oder gleich 15 Molprozent darstellt, jedes B2 einen Polybutadienblock mit einem Vinylgehalt größer oder gleich 25 Molprozent darstellt, n eine ganze Zahl von 2 bis 6 ist, und X der Rest eines Kopplungsmittels ist, wobei das Massenverhältnis B1/B2 größer oder gleich 1:1 ist, und das Blockcopolymer (S-B1-B2)nX ein maximales Molekulargewicht aufweist, welches das 1,5- bis 6,0-fache des maximalen Molekulargewichts des Blockcopolymers S-B1-B2 beträgt;
und das Massenverhältnis Elastomer/Adjuvans in der Zusammensetzung von 15/1 bis 2/1 beträgt.

2. Zusammensetzung nach Anspruch 1,
wobei das Massenverhältnis:
S-B1-B2/(S-B1-B2)nX
größer oder gleich 1:1 ist, vorzugsweise von 1:1 bis 10:1 und noch besser von 1:1 bis 4:1.

3. Zusammensetzung nach Anspruch 1 oder Anspruch 2,
wobei S Styrol darstellt.

4. Zusammensetzung nach einem der vorhergehenden Ansprüche,
welche von 0,5 Massen-% bis 20 Massen-% Elastomer im Verhältnis zur Gesamtmasse der Zusammensetzung umfasst, vorzugsweise von 0,5 bis 15 %.

5. Zusammensetzung nach einem der vorhergehenden Ansprüche,
welche von 0,05 Massen-% bis 2,5 Massen-% Olefinpolymer-Adjuvans im Verhältnis zur Gesamtmasse der Zusammensetzung umfasst, vorzugsweise von 0,15 bis 2 %.

6. Zusammensetzung nach einem der vorhergehenden Ansprüche,
wobei das Olefinpolymer-Adjuvans ausgewählt ist aus der Gruppe bestehend aus:
(a) statistischen oder Blockcopolymeren von Ethylen und einem Monomer, ausgewählt aus Glycidylacrylat und Glycidylmethacrylat, umfassend von 50 Massen-% bis 99,7 Massen-% Ethylen;
(b) statistischen oder Blockterpolymeren von Ethylen, einem Monomer A, ausgewählt aus Vinylacetat und C₁-C₆-Alkylacrylaten oder - methacrylaten, und einem Monomer B, ausgewählt aus Glycidylacrylat und Glycidylmethacrylat, umfassend von 0,5 Massen-% bis 40 Massen-% Einheiten, die von dem Monomer A stammen, und von 0,5 Massen-% bis 15 Massen-% Einheiten, die von dem Monomer B stammen, wobei der Rest aus Einheiten gebildet ist, die von Ethylen stammen; und
(c) Copolymeren, die erhalten werden aus der Pfropfung eines Monomers B, ausgewählt aus Glycidylacrylat und Glycidylmethacrylat, auf ein Substrat, bestehend aus einem Polymer, ausgewählt aus Polyethylenen, Polypropylenen, statistischen oder Blockcopolymeren von Ethylen und Vinylacetat, statistischen oder Blockcopolymeren von Ethylen und C₁-C₆-Alkylacrylat oder -methacrylat, umfassend von 40 Massen-% bis 99,7 Massen-% Ethylen, wobei die gepfropften Copolymere 0,5 Massen-% bis 15 Massen-% gepfropfte Einheiten umfassen, die von dem Monomer B stammen,
(d) Mischungen von mindestens zwei Komponenten (a), (b) und (c).

7. Zusammensetzung nach Anspruch 6,
wobei das Olefinpolymer-Adjuvans ausgewählt ist aus statistischen oder Blockterpolymeren von Ethylen, einem Monomer A, ausgewählt aus Vinylacetat und C₁-C₆-Alkylacrylaten oder -methacrylaten, und einem Monomer B, ausgewählt aus Glycidylacrylat und Glycidylmethacrylat, umfassend von 0,5 Massen-% bis 40 Massen-% Einheiten, die von dem Monomer A stammen, und von 0,5 Massen-% bis 15 Massen-% Einheiten, die von dem Monomer B stammen, wobei der Rest aus Einheiten gebildet ist, die von Ethylen stammen.

8. Zusammensetzung nach Anspruch 7,
wobei das Olefinpolymer-Adjuvans ausgewählt ist aus statistischen Terpolymeren von Ethylen, einem Monomer A, ausgewählt aus C₁-C₆-Alkylacrylaten oder -methacrylaten, und einem Monomer B, ausgewählt aus Glycidylacrylat und Glycidylmethacrylat, umfassend von 0,5 Massen-% bis 40 Massen-% Einheiten, die von dem Monomer A stammen, und von 0,5 Massen-% bis 15 Massen-% Einheiten, die von dem Monomer B stammen, wobei der Rest aus Einheiten gebildet ist, die von Ethylen stammen.

9. Verfahren zur Herstellung einer Bitumen-/Polymerzusammensetzung nach einem der Ansprüche 1 bis 8,
**dadurch gekennzeichnet, dass** in Kontakt gebracht werden, wobei bei Temperaturen zwischen 100 °C und 200 °C und unter Rühren während einer Dauer von mindestens 10 Minuten gearbeitet wird:
- Bitumen,
- von 0,5 Massen-% bis 20 Massen-% mindestens eines Elastomers,
- von 0,05 Massen-% bis 2,5 Massen-% mindestens eines Olefinpolymer-Adjuvans,
- gegebenenfalls Additive.

10. Asphalt,
**dadurch gekennzeichnet, dass** er mindestens eine Bitumen-/Polymerzusammensetzung nach einem der Ansprüche 1 bis 8 und mineralische und/oder synthetische Füllstoffe umfasst.

11. Bituminöse Beschichtung,
**dadurch gekennzeichnet, dass** sie mindestens eine Bitumen-/Polymerzusammensetzung nach einem der Ansprüche 1 bis 8, Granulate und gegebenenfalls mineralische und/oder synthetische Füllstoffe umfasst.

12. Verwendung mindestens einer Bitumen-/Polymerzusammensetzung nach einem der Ansprüche 1 bis 8, zur Herstellung eines Oberflächenbelags, einer heißen Beschichtung, einer warmen Beschichtung, einer kalten Beschichtung, einer kalt gegossenen Beschichtung, einer schweren Emulsion, wobei das Bindemittel mit Granulaten und/oder gemahlenem wiederverwendetem Material assoziiert ist.

13. Verwendung mindestens einer Bitumen-/Polymerzusammensetzung nach einem der Ansprüche 1 bis 8, zur Herstellung einer Dichtungsbeschichtung, einer Membran oder einer Imprägnierungsschicht.

## Claims

1. Bitumen/polymer composition comprising:
- bitumen,
- at least one elastomer, and
- at least one olefinic polymer adjuvant functionalized by at least glycidyl functional groups,
**characterized in that**:
• the elastomer is selected from thermally crosslinkable block copolymers of formula S-B1-B2, in which S represents a monovinylaromatic hydrocarbon block having a peak molecular weight of from 10 000 to 25 000, B1 is a polybutadiene block having a vinyl content of less than or equal to 15 mole percent, B2 is a polybutadiene block having a vinyl content of greater than or equal to 25 mole percent, the B1/B2 weight ratio is greater than or equal to 1:1, and in which the S-B1-B2 block copolymer has a peak molecular weight of from 40 000 to 200 000;
• the elastomer may also comprise at least one thermally crosslinkable block copolymer corresponding to the formula (S-B1-B2)nX in which each S represents a monovinylaromatic hydrocarbon block having a peak molecular weight of from 10 000 to 25 000, each B1 represents a polybutadiene block having a vinyl content of less than or equal to 15 mole percent, each B2 represents a polybutadiene block having a vinyl content of greater than or equal to 25 mole percent, n is an integer ranging from 2 to 6, and X is the residue of a coupling agent, in which the B1/B2 weight ratio is greater than or equal to 1:1, and the (S-B1-B2)nX block copolymer has a peak molecular weight which is from 1.5 to 6.0 times the peak molecular weight of the S-B1-B2 block copolymer;
and the elastomer/adjuvant weight ratio in the composition ranges from 15/1 to 2/1.

2. Composition according to Claim 1, in which the
S-B1-B2/(S-B1-B2)nX
weight ratio is greater than or equal to 1:1, preferably from 1:1 to 10:1, and better still from 1:1 to 4:1.

3. Composition according to Claim 1 or Claim 2, in which S represents styrene.

4. Composition according to any one of the preceding claims, which comprises from 0.5% to 20% by weight of elastomer relative to the total weight of the composition, preferably from 0.5% to 15%.

5. Composition according to any one of the preceding claims, which comprises from 0.05% to 2.5% by weight of olefinic polymer adjuvant relative to the total weight of the composition, preferably from 0.15% to 2%.

6. Composition according to any one of the preceding claims, in which the olefinic polymer adjuvant is selected from the group consisting of:
(a) random or block copolymers of ethylene and of a monomer selected from glycidyl acrylate and glycidyl methacrylate, comprising from 50% to 99.7% by weight of ethylene;
(b) random or block terpolymers of ethylene, of a monomer A selected from vinyl acetate and C₁ to C₆ alkyl acrylates or methacrylates and of a monomer B selected from glycidyl acrylate and glycidyl methacrylate, comprising from 0.5% to 40% by weight of units resulting from the monomer A and from 0.5% to 15% by weight of units resulting from the monomer B, the remainder being formed of units resulting from the ethylene; and
(c) copolymers resulting from the grafting of a monomer B, selected from glycidyl acrylate and glycidyl methacrylate, to a substrate consisting of a polymer selected from polyethylenes, polypropylenes, random or block copolymers of ethylene and of vinyl acetate and random or block copolymers of ethylene and of C₁ to C₆ alkyl acrylate or methacrylate, comprising from 40% to 99.7% by weight of ethylene, said grafted copolymers comprising from 0.5% to 15% by weight of grafted units resulting from the monomer B,
(d) mixtures of at least two compounds (a), (b) and (c).

7. Composition according to Claim 6, in which the olefinic polymer adjuvant is selected from random or block terpolymers of ethylene, of a monomer A selected from vinyl acetate and C₁ to C₆ alkyl acrylates or methacrylates and of a monomer B selected from glycidyl acrylate and glycidyl methacrylate, comprising from 0.5% to 40% by weight of units resulting from the monomer A and from 0.5% to 15% by weight of units resulting from the monomer B, the remainder being formed of units resulting from the ethylene.

8. Composition according to Claim 7, in which the olefinic polymer adjuvant is selected from random terpolymers of ethylene, of a monomer A selected from C₁ to C₆ alkyl acrylates or methacrylates and of a monomer B selected from glycidyl acrylate and glycidyl methacrylate, comprising from 0.5% to 40% by weight of units resulting from the monomer A and from 0.5% to 15% by weight of units resulting from the monomer B, the remainder being formed of units resulting from the ethylene.

9. Process for preparing a bitumen/polymer composition according to any one of Claims 1 to 8, **characterized in that** the following are brought into contact, the operation being carried out at temperatures between 100°C and 200°C and with stirring for a period of at least 10 minutes:
- bitumen,
- from 0.5% to 20% by weight of at least one elastomer,
- from 0.05% to 2.5% by weight of at least one olefinic polymer adjuvant,
- optionally additives.

10. Asphalt, **characterized in that** it comprises at least one bitumen/polymer composition according to any one of Claims 1 to 8, and mineral and/or synthetic fillers.

11. Bituminous mix, **characterized in that** it comprises at least one bitumen/polymer composition according to any one of Claims 1 to 8, aggregates, and optionally mineral and/or synthetic fillers.

12. Use of at least one bitumen/polymer composition as claimed in any one of Claims 1 to 8, for preparing a surface dressing, a hot bituminous mix, a warm bituminous mix, a cold bituminous mix, a cold-poured bituminous mix, an emulsion gravel, said binder being combined with aggregates and/or recycled milled products.

13. Use of at least one bitumen/polymer composition as claimed in any one of Claims 1 to 8, for preparing a waterproof coating, a membrane or a seal coat.
